# EUROPÄISCHE PATENTSCHRIFT

(11) **EP 2 831 462 B1**
(45) Veröffentlichungstag und Bekanntmachung des Hinweises auf die Patenterteilung: **24.05.2017**
(21) Anmeldenummer: 13713813.7
(22) Anmeldetag: 22.03.2013
(51) Int. Cl.: F16D 65/18, F16D 55/226, F16D 65/56

(54) **ZUSPANNVORRICHTUNG EINER SCHEIBENBREMSE**
BRAKE APPLICATION DEVICE OF A DISK BRAKE
DISPOSITIF D'APPLICATION D'EFFORT D'UN FREIN À DISQUE

(30) Priorität: 26.03.2012 DE 102012006101
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: ASEN, Alexander, 94428 Eichendorf (DE); FRICKE, Jens, 94474 Vilshofen (DE); IRASCHKO, Johann, 85301 Schweitenkirchen (DE); PESCHEL, Michael, 82296 Schöngeising (DE); STOEGER, Christian, 94474 Vilshofen (DE)
(86) Internationale Anmeldenummer: PCT/EP2013/056030
(87) Internationale Veröffentlichungsnummer: WO 2013/143996

(56) Entgegenhaltungen:
- EP-A2- 0 753 683
- WO-A1-91/19115
- DE-U1- 9 312 119
- GB-A- 926 137

## Beschreibung

Die Erfindung betrifft eine Zuspannvorrichtung einer Scheibenbremse, insbesondere einer mittels einer Kolbenstange eines pneumatisch oder elektromotorisch betriebenen Bremszylinders betätigbaren Scheibenbremse. Eine gattungsgemäße Zuspannvorrichtung geht z.B. aus EP-A-0 753 683 hervor.

Pneumatisch betätigte Scheibenbremsen weisen in der Regel einen als Schiebesattel, Schwenksattel oder Festsattel ausgebildeten Bremssattel auf, in welchem eine Zuspannvorrichtung angeordnet ist, welche dazu dient, Bremsbeläge beidseits einer Bremsscheibe und die Bremsscheibe miteinander in Wirkverbindung zu bringen, um durch Reibung eine Bremswirkung zu erzielen.

In der WO 91/19115 weist die Zuspannvorrichtung einen Drehhebel auf, der an seinem unteren Ende wenigstens einen Exzenteransatz aufweist, der über ein erstes Schwenklager drehbar in Inneren des Bremssattels gelagert ist und der über eine Stützwalze an einer Traverse abgestützt ist, in welche die Nachstellspindeln eingeschraubt sind, die über Druckstücke auf den aktionsseitigen Bremsbelag einwirken können, um diesen bei Bremsungen in Richtung der Bremsscheibe zu verschieben. Diese bekannte pneumatisch betätigte Scheibenbremse weist zudem eine automatische Nachstellvorrichtung auf, um den Belag- und Scheibenverschleiß auszugleichen.

Nach der WO 91/19115 wirkt die Nachstellvorrichtung drehend entweder auf die Mutter (die in dieser Schrift als die drehfest angeordnete Traverse ausgebildet ist) oder die Spindel eines als Mutter-/Spindelanordnung ausgebildeten Gewindetriebes, um durch eine Relativverschraubung zwischen Mutter und Schraube die Länge der Mutter-/Spindelanordnung zu verändern, wodurch die Gesamtlänge der Zuspannvorrichtung zwischen dem Bremsbelag und dem Widerlager der Zuspannvorrichtung am Inneren des Bremssattels vergrößert wird, wodurch wiederum der zunehmende Belagverschleiß ausgeglichen wird.

Die automatische Nachstellvorrichtung wird mittelbar oder unmittelbar von einem Spreiz- oder Betätigungsmechanismus angetrieben. So ist es aus dem genannten Stand der Technik bekannt, den Drehhebel der Zuspannvorrichtung über einen Antriebsstift mit einem Getriebeelement der Nachstellvorrichtung zu koppeln, so dass bei einem Zuspannen der Bremse, bei welchem der Drehhebel verschwenkt wird, auch das Getriebeelement der Nachstellvorrichtung bewegt, insbesondere gedreht wird. Diese Drehung wird über weitere Getriebeelemente der Nachstellvorrichtung auf ein Abtriebsgetriebeelement übertragen, welches drehfest mit der Mutter oder der Spindel des Gewindetriebes bzw. der Mutter-/Spindelanordnung gekoppelt ist.

In der WO 91/19115 sind zwei drehfest gekoppelte Mutter-Spindelanordnungen vorgesehen, die über ein Synchronisationsgetriebe - ein Umschlingungsgetriebe wie eine Kette oder einen Zahnriemen - drehfest gekoppelt sind, wobei nur in einer dieser Anordnungen eine Nachstellvorrichtung bzw. ein Nachstellantrieb angeordnet ist. Das Synchronisationsgetriebe ist zwischen dem Exzenteransatz des Drehhebels und der Traverse angeordnet.

Die US RE38,874E zeigt darüber hinaus die auch in Fig. 16 dieser Anmeldung abgebildete Schiebesattel-Scheibenbremse, bei welcher die Anordnung von Drehhebel und Stützwalze im Vergleich zum eingangs genannten Stand der Technik "umgedreht" worden ist, d.h., die Stützwalze oder eine stützwalzenartige Kontur ist drehfest an der Innenseite des Bremssattels angeordnet oder ausgebildet und auf der Stützwalze ist der untere Exzenteransatz des Drehhebels drehbar gelagert, welcher an seiner von der Stützwalze abgewandeten Seite über ein Schwenklager auf eine Traverse einwirkt, in welche die beiden über das Synchronisationsgetriebe - hier eine Kegelradanordnung - gekoppelten Stellspindeln mit den Druckstücken eingeschraubt sind.

Die vorstehend beschriebenen Zuspannvorrichtungen haben sich an sich bewährt. Es soll aber dennoch eine hinsichtlich ihres konstruktiven Aufbaus und ihres Betriebsverhaltens optimierte Zuspannvorrichtung geschaffen werden.

Die Lösung dieser Aufgabe ist das Ziel der Erfindung.

Die Erfindung löst diese Aufgabe durch den Gegenstand des Anspruchs 1. Vorteilhafte Ausgestaltungen sind in den Unteransprüchen angegeben.

Der oder die verschiebliche Schlitten an dem von dem Bremsbelag abgewandten Ende des Gewindetriebes, insbesondere der oder die Kreuzschlitten, insbesondere der oder die Kreuzschlitten in der wenigstens einen Aufnahme und mit der wenigstens einen relativ zum Kreuzschlitten verschieblichen Buchse, erlauben in einfacher und baulich kompakter Weise den Ausgleich von Querbewegungen der Traverse.

Nach dem Gegenstand des Anspruchs 3 wird darüber hinaus die Anordnung und Ausgestaltung des Synchronisationsgetriebes in einfacher Weise optimiert. Aus der gattungsgemäßen WO 91/19115 ist es zwar an sich bekannt, ein Umschlingungsgetriebe vorzusehen, diese umfasst aber den Bereich zwischen Drehhebel und Traverse und ist daher nur unzureichend geschützt. Vorzugsweise liegen dagegen direkt Zahnräder oder dgl. zwischen der Traverse und dem Drehhebel, was nach einer vorteilhaften Variante insbesondere dadurch vorteilhaft möglich wird, dass diese Getriebeelementes in Ausnehmungen von einem oder mehreren Lagerböcken an der Traverse eingreifen, die ebenfalls zwischen der Traverse und dem Drehhebel angeordnet sind. Derart sind die Getriebeelemente nicht im Kraftfluss zwischen der Traverse und dem Drehhebel angeordnet, können aber in Zuspannrichtung direkt in den Raum zwischen diesen Elementen eingesetzt werden.

Vorteilhafte Ausgestaltungen der Erfindung sind den Unteransprüchen zu entnehmen.

Nachfolgend wird die Erfindung anhand von Ausführungsbeispielen unter Bezug auf die Zeichnung näher beschrieben. Es zeigt:
- Fig. 1: einen Schnitt durch einen Bereich eines Bremssattels und einer Zuspannvorrichtung einer erfindungsgemäßen Scheibenbremse;
- Fig. 2: eine Sprengansicht von Elementen der Zuspannvorrichtung aus Fig. 1;
- Fig. 3a: eine perspektivische Ansicht einer Baugruppe der Zuspannvorrichtung aus Fig. 1 und 2;
- Fig. 3b: eine perspektivische Ansicht einer Druckstempelanordnung der Zuspannvorrichtung aus Fig. 1;
- Fig. 4: einen Schnitt durch eine Variante einer Hebelbaugruppe für eine Zuspannvorrichtung ähnlich zur Fig. 1;
- Fig. 5: eine perspektivische Ansicht eines Lagerbockes aus Fig. 4;
- Fig. 6: verschiedene Ansichten der Lagerböcke der Zuspannvorrichtung aus Fig. 1;
- Fig. 7: eine perspektivische Ansicht eines Synchronisationsgetriebes der Zuspannvorrichtung aus Fig. 1;
- Fig. 8: eine Ansicht des an einer Traverse mit einer Nachstellvorrichtung und Druckstempeln angeordneten Synchronisationsgetriebes;
- Fig. 9: eine weitere perspektivische Ansicht eines Teils der Zuspannvorrichtung aus Fig. 1;
- Fig. 10a: eine perspektivische Ansicht einer Drehhebelbaugruppe der Zuspannvorrichtung aus Fig. 9;
- Fig. 10b: eine perspektivische Ansicht eines Antriebsblechs für den Drehhebel aus Fig. 10a; und
- Fig. 11: eine perspektivische Ansicht eines Teils einer Traverse mit einem Gewindetrieb;
- Fig. 12: eine vereinfachte perspektivische Ansicht eines Gewindetriebes, bei welcher das vom Bremsbelag abgewandte Ende mit einem Schlittenelement in den Vordergrund gedreht ist;
- Fig. 13: eine perspektivische Ansicht eines Buchsenelementes;
- Fig. 14: eine Schnittansicht eines Ausschnittsbereiches eines Bremssattels mit einer Zuspannvorrichtung; und
- Fig. 15: eine perspektivische Ansicht eines Ausschnittsbereiches eines Bremssattels an einem Bremsträger; und
- Fig. 16: einen Schnitt durch eine bekannte Scheibenbremse.

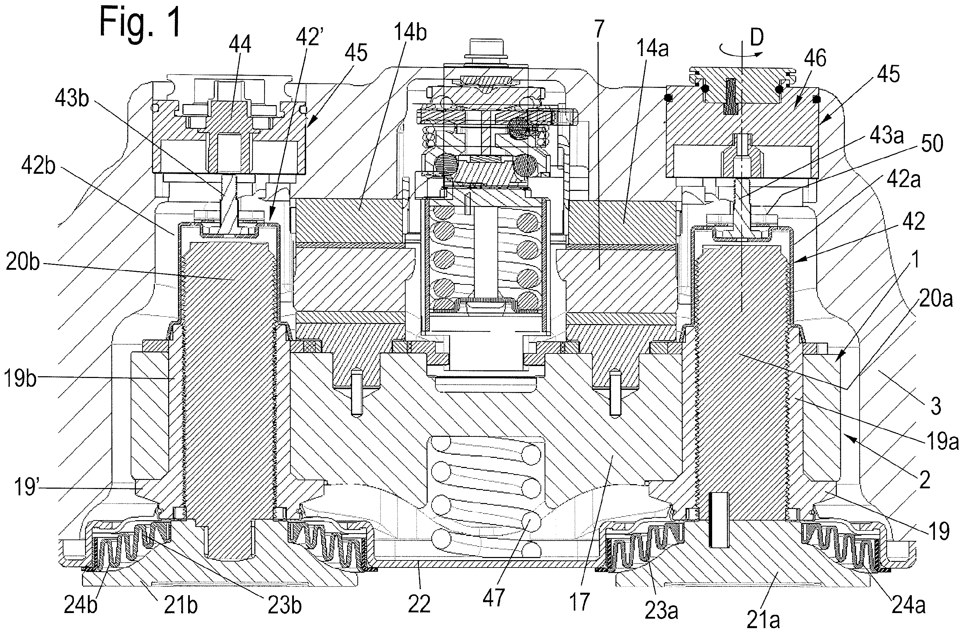

Fig. 1 zeigt einen Schnitt durch einen Abschnitt einer eine Zuspannvorrichtung 1 aufnehmenden Öffnung 2 eines Bremssattels 3 einer von einem (hier nicht dargestellten) Aktuatorelement betätigbaren Scheibenbremse. Bei dem Aktuatorelement handelt es sich vorzugsweise um eine Kolbenstange eines pneumatisch oder elektromotorisch oder federbetätigten Bremszylinders (hier nicht dargestellt).

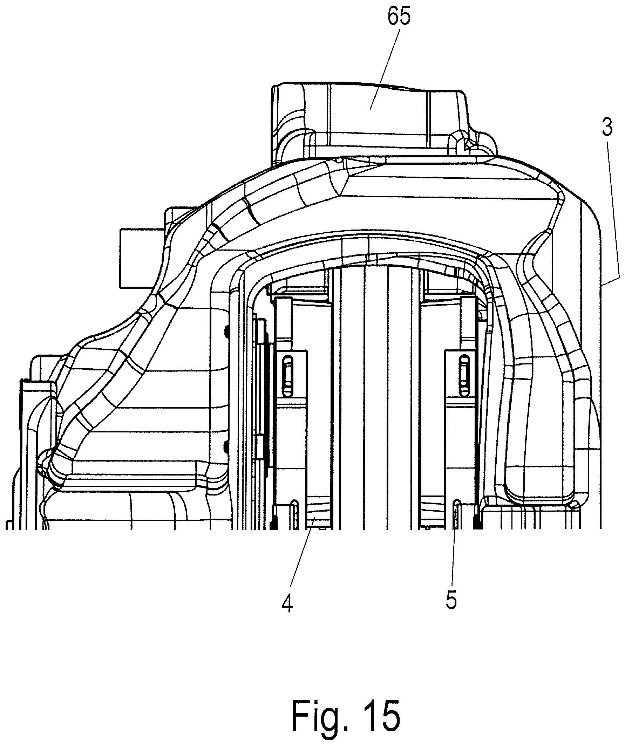

Der ein- oder mehrteilige Bremssattel 3 ist vorzugsweise als ein Schiebesattel ausgebildet, der an einem (in Fig. 15 zu erkennenden) Bremsträger 65 - beispielsweise an Lagerbolzen - verschiebbar geführt ist.

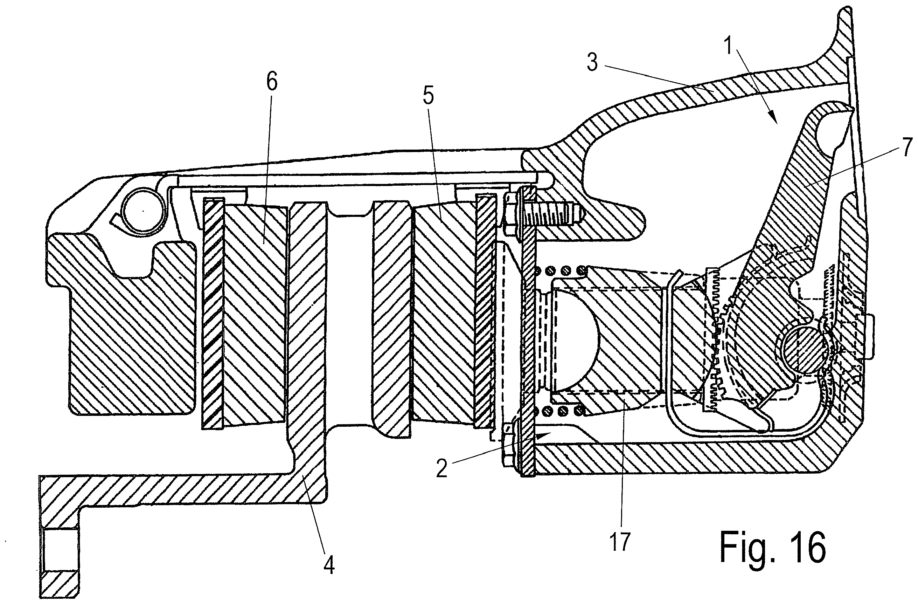

Der Bremssattel 3 umgreift - beispielsweise nach Art der Fig. 15 und des Standes der Technik der Fig. 16 - rahmenartig einen Randabschnitt einer Bremsscheibe 4. Beidseits der Bremsscheibe 4 sind Bremsbeläge 5, 6 angeordnet.

Bei Bremsungen wird mit der Zuspannvorrichtung 1 der zuspannseitige Bremsbelag 5 direkt gegen die Bremsscheibe 4 gepresst, wohingegen der reaktionsseitige Bremsbelag 6 mit dem verschieblichen Bremssattel 3 gegen die Bremsscheibe 4 gezogen wird.

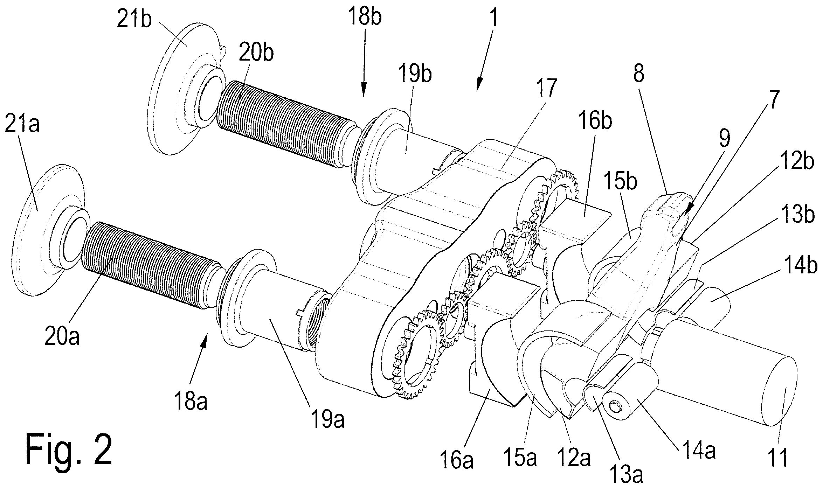

Zur Realisierung einer Exzenterbetätigung weist die Zuspannvorrichtung 1 (siehe jetzt die beispielhafte bevorzugte Ausführung der Fig. 1 und 2) einen schwenkbaren Drehhebel 7 auf, der an seinem einen Ende 8 eine Ausnehmung 9 für den Eingriff der Kolbenstange aufweist. An seinem anderen Ende weist er hier mittig eine Ausnehmung 10 zum Übergreifen einer im Wesentlichen zylindrisch ausgestalteten Baueinheit auf, die eine Nachstellvorrichtung 11 ausbildet.

Der Drehhebel 7 weist ferner hier beidseits der Ausnehmung 10 für die Nachstellvorrichtung 11 zwei Exzenteransätze 12a, b auf, die sich jeweils über ein Schwenklager 13a, b an jeweils einem Stützstift 14a, b abstützen, welche an der Innenseite des Bremssattels 3 abgestützt sind. An der von den Stützstiften 14a, b abgewandten Seiten ist der Drehhebel 7 an seinen Exzenterabschnitten 12a, b über jeweils ein weiteres Schwenklager 15a, b an jeweils einem vorzugsweise einstückigen Lagerbock(element) 16a, b abgestützt, die wiederum an einer Traverse 17 (die quer zur Bremsscheibe ausgerichtet ist) abgestützt sind, die von einem oder hier zwei Zuspannstempeln 18a, b durchsetzt ist, so dass die Traverse hier zwischen diesen zwei Zuspannstempeln 18a, b auch eine Brücke bildet. Die Schwenklager 13, 15 können als Gleit- oder Wälzlager ausgebildet sein.

Die Zuspannstempel 18a, bweisen hier jeweils eine Gewindehülse 19a, b, einen Gewindestempel 20a, b und jeweils wenigstens ein an den Gewindestempeln 20a, b angeordnetes Druckstück 21a, b auf (Fig. 1, 2). Die Bauteil-Untergruppe, die wenigstens oder ausschließlich aus "Gewindehülse und Gewindestempel" besteht, wird dabei nachfolgend auch als "Gewindetrieb" bezeichnet. Diese Anordnung ist bevorzugt, da die zwei Zuspannstempel 18a, b eine gleichmäßige Kraftverteilung beim Zuspannen und einen weitestgehend gleichmäßigen Verschleiß insbesondere des zuspannseitigen Bremsbelages 5 sicherstellen. Die Erfindung ist aber nicht auf diese Variante beschränkt.

An ihrer zur Bremsscheibe 4 gewandten Seite ist die Öffnung 2 von einer Verschlußplatte 22 verschlossen, die Öffnungen 23a, b aufweist, welche von den Gewindestempeln 20a, b durchsetzt ist, wobei die Spalte zwischen den Gewindestempeln 20a, b und der Verschlußplatte 22 von Dichtungsanordnungen 24a, b abgedichtet sind (Fig. 1).

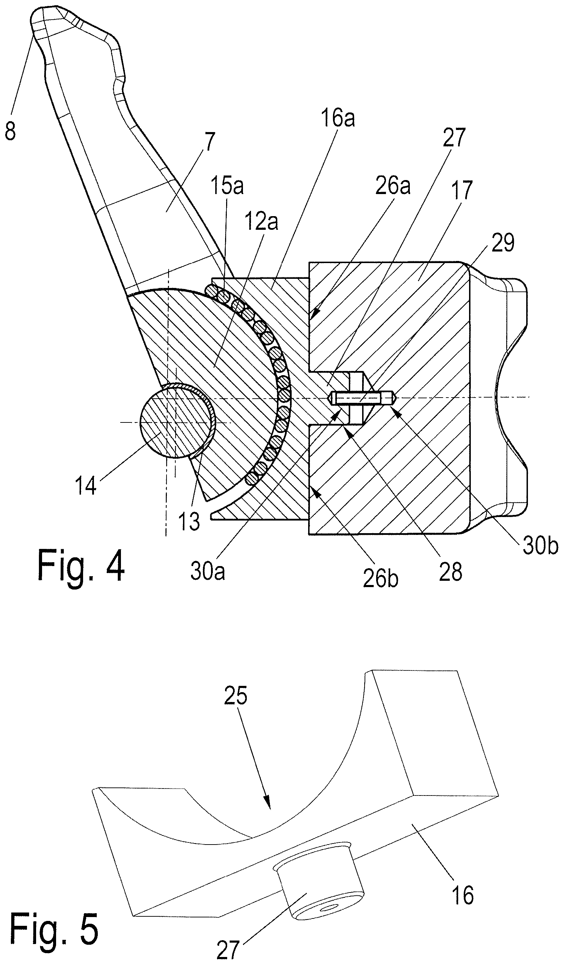

Fig. 4 veranschaulicht, dass die Lagerböcke 16a, b jeweils an ihren zu den Exzenterabschnitten 12a, b des Drehhebels 7 gewandten Seiten eine hier teilzylindrische Ausnehmung 25 aufweisen, in welche jeweils eines der Schwenklager (hier) 15a und einer der Exzenteransätze (hier) 12a eingreift.

An ihrer zur Traverse 17 gewandten Seite stützen sich die Lagerbockelemente 16a, b jeweils in einem oder mehreren Kontaktbereichen 26 an der Traverse 17 ab.

Vorzugsweise greifen die Lagerbockelemente 16a, b und die Traverse 17 ferner zur Sicherstellung eines korrekten Sitzes an der Traverse 17 formschlüssig ineinander.

Hier ist vorteilhaft und konstruktiv einfach vorgesehen, dass die Lagerbockelemente 16a, b mit jeweils wenigstens einem Zentrieransatz 27 in eine korrespondierende Ausnehmung 28 in der Traverse 17 eingreifen, wobei noch ein Zentrierstift 29 in Sacklöcher 30 in dem Zentrieransatz 27 und im Grund der Ausnehmung 28 eingreifen kann, welcher jeweils den Sitz des Lagerbockes 16 an der Traverse 17 weiter optimiert. Dies ist besonders gut in Fig. 4 zu erkennen.

Diese vorteilhafte Ausgestaltung von Drehhebel 7, Lager 15 und wenigstens einem Lagerbockelement 16 ist bei Zuspannvorrichtungen verschiedener Art realisierbar.

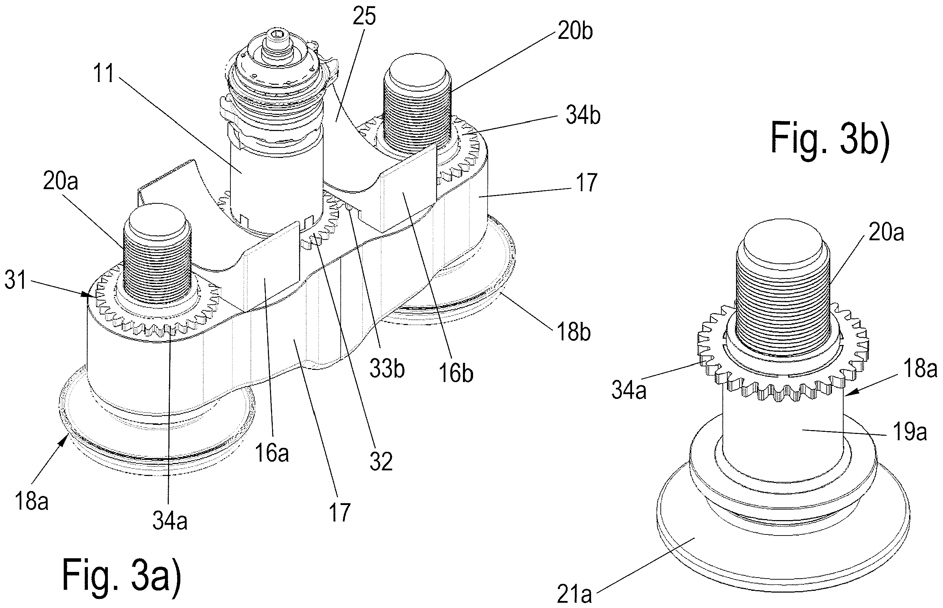

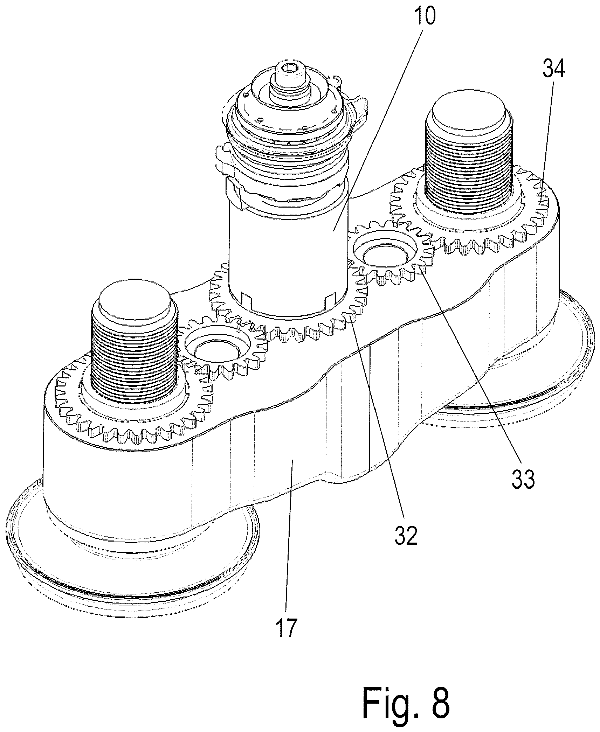

Nach der Ausgestaltung der Fig. 3 sowie 6 bis 8 wird sie von einer besonders vorteilhaften Getriebeanordnung 31 zum synchronen Antrieb der Druckstempel 19 ergänzt.

Diese Getriebeanordnung 31 weist hier (Fig. 3, 6, 7, 8) eine Anordnung von miteinander kämmenden, in einer Ebene liegenden Zahnrädern 32, 33a, b, 34 a, b auf, die an der zum Drehhebel 12 weisenden Seite der Traverse 17 zwischen der Traverse 17 und dem Drehhebel 12 angeordnet sind.

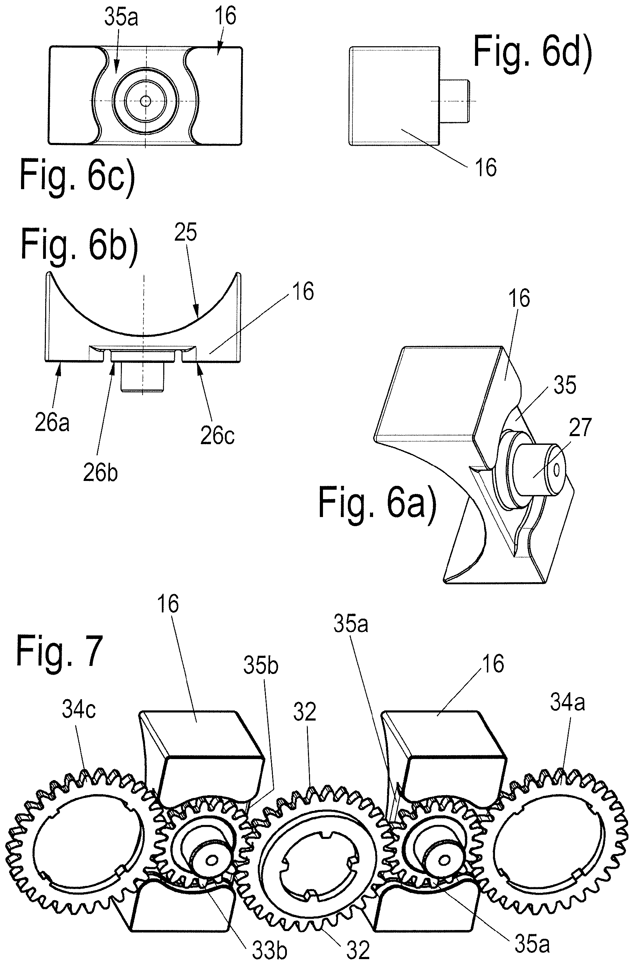

Nach Fig. 7 ist vorgesehen, dass die Lagerböcke 16a, b diese Zahnräder 32 -34 teilweise übergreifen, so dass die Zahnräder unmittelbar an der Traverse 17 angeordnet sein können.

Einzelne der Zahnräder 32 - 34 greifen jeweils in eine Aussparung 35a, b an den von den Lagerböcken 16a, b gewandten Seiten der Lagerböcke 16a, b ein, so dass die Lageböcke 16 nur seitlich oder seitlich und mittig der Zahnräder 33 an der Traverse 17 abgestützt sind.

Derart wird das Synchronisationsgetriebe 31 besonders geschützt zentral in der Zuspannvorrichtung 1 angeordnet, was auch den Vorteil mit sich bringt, dass die Zuspannstempel 18 axial relativ kurz gestaltet werden können.

Das mittlere Zahnrad 32 ist hier das Abtriebszahnrad der Nachstellvorrichtung 10, welches Nachstelldrehbewegungen der Nachstellvorrichtung 10 über die mittleren Zahnräder 33a, b die von den Lagerböcken 16,a,b übergriffen werden, auf Antriebszahnräder 34a, b übertragen, die drehfest auf die Gewindehülsen 19 der Druckstempel 18 aufgesetzt sind. Die Zahnräder 33 sind hier auf den Zentrieransätzen 27drehbar gelagert.

Bei Drehungen des Antriebszahnrades 32 werden die beiden Gewindehülsen 19 gedreht, so dass die (z.B. an den Bremsbelägen) drehfest gehaltenen Gewindestempel 20 axial bewegt werden, um Belagverschleiß auszugleichen.

Die Getriebeanordnung 31 zur Synchronisation und/oder zum Antrieb der wenigstens einen Gewindehülse 19a, b oder des wenigstens einen Gewindestempels 20a, b ist derart besonders sicher geschützt sowie platzsparend in die Zuspannvorrichtung 1 integriert.

Ein besonderer Vorteil der eine separate Erfindung darstellenden, die Getriebeanordnung 31 aber auch sehr sinnvoll und vorteilhaft ergänzenden Lagerböcke 16a, b zum Abstützen des Drehhebels 7 nebst seines Schwenklagers 15 an der Traverse 17 - beispielsweise im Vergleich zu einem Abstützen über ein gehärtetes Lagerblech in der Traverse - liegt darin, dass die Herstellung der Traverse 17 durch die Lagerböcke deutlich vereinfacht werden kann. So muss sie in dem dargestellten Ausführungsbeispiel lediglich eine ebene Anlagefläche für die Kontaktbereiche 26 und einige Bohrungen (28, 30) aufweisen, um die Zentrier- und Lageransätze 27 der Lagerböcke 16 aufzunehmen. Die Auflageflächen 26a, b, c an den Lagerböcken 16 sind in Fig. 6 besonders gut zu erkennen.

Der Zentrieransatz 27 weist vorzugsweise Bereiche verschiedenen Durchmessers auf, von denen einer als Achse für das Zahnrad 33 dient, wobei eine Axialfläche als eine der Kontaktflächen 26b der Lagerböcke 16a, b an der Traverse 17 dient.

Ein besonderer Vorteil der Lagerböcke 16 besteht ferner darin, dass sie es möglich machen, unterschiedliche Materialien oder jedenfalls unterschiedlich bearbeitete Materialien (Guss, spannende Bearbeitung, Schieden usw.) für die Lagerböcke 16 und die eigentliche "reduzierte" Traverse 17 zu verwenden, so dass sie jeweils an ihre Aufgabe optimal angepasst werden können.

Die Lagerböcke 16 sind dabei in angepasster Ausgestaltung auch bei Bremsen einsetzbar, an welche sich der Drehhebel über eine Stützwalze oder Stützstifte nicht am Bremssattel sondern an der Traverse abstützt, wobei dann die größeren Exzenteransätze am Inneren des Bremssattels abgestützt sind (hier nicht dargestellt).

Nachfolgend sei die vorteilhafte Kopplung zwischen der Nachstellvorrichtung 11 und den Zuspannstempeln 20 näher betrachtet.

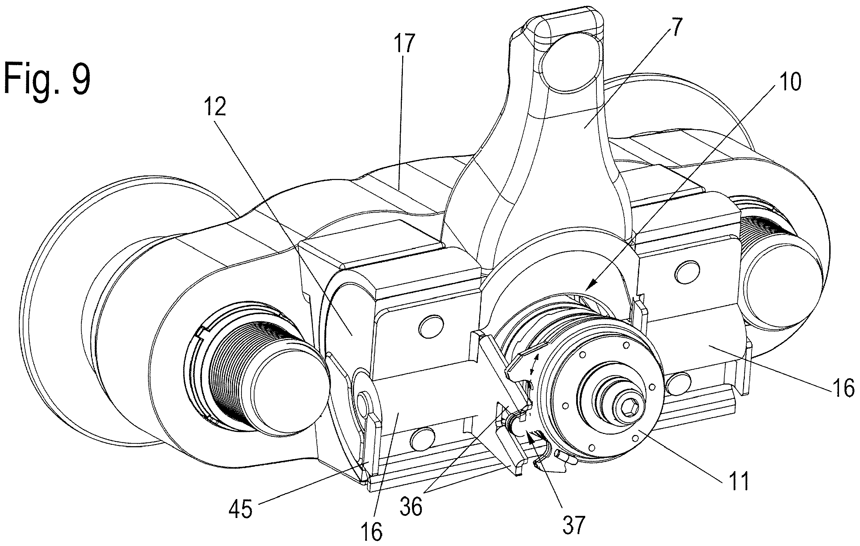

Die Nachstellvorrichtung 11 dient dazu, bei Bremsungen den Verschleiß der Bremsscheibe 4 und der Bremsbeläge 5, 6 auszugleichen, indem die Länge der Zuspann-Hierzu wird bei Bremsungen über eine Antriebsgetriebeverbindung - hier eine Antriebsgabel aus Antriebsfingern 36 am Drehhebel 7 (siehe Fig. 9, 10, 11), in die eine Antriebsgabel 37 der Nachstellvorrichtung 10 zahnähnlich eingreift - über Getriebeelemente der Nachstellvorrichtung 11 (die typischerweise einen Freilauf als eine Einwegdrehkupplung umfasst) im Falle eines zu großen Lüftspiels ggf. eine Nachstelldrehbewegung des Antriebsrades 32 zugelassen bzw. erzeugt, welche über die Zahnräder 33a,b; 34a,b hier die Gewindehülsen 19a, b antreibt (wobei es auch denkbar wäre, derart die Gewindestempel 20a, b anzutreiben, wenn die Gewindestempel 20 beispielsweise direkt in Innengewinde der Traverse 17 eingreifen würden; hier nicht dargestellt).

Werden die in der Traverse 17 axial ortsfest angeordneten aber drehbaren Gewindehülsen 19a, b verdreht, verlängert sich die Gesamtlänge der Zuspannstempel 18a, b, da die Gewindestempel 19 unverdrehbar aber axial beweglich gehalten sind (z.B. an den Bremsbelägen).

Nach einem besonders vorteilhaften Aspekt der Erfindung ist das Antriebs- und/oder Synchronisationsgetriebe zwischen dem Drehhebel 7 und der Traverse 17 angeordnet.

Eine solche Anordnung ist zwar prinzipiell auch aus der eingangs erwähnten WO 91/19115 bekannt. Allerdings ist das Synchronisationsgetriebe dort als Umschlingungsgetriebe mit einem Zahnriemen ausgebildet, so dass es nicht so kompakt und geschützt, wie die Zahnradanordnung der Fig. 7 zwischen der Traverse 17 und dem Drehhebel unterbringbar ist. Alternativen zur Zahnradanordnung könnten Kegelrad- oder Kronenradgetriebe sein, welche zwischen dem Drehhebel 12 und der Traverse 17 angeordnet sind.

Zu erwähnen ist, dass eine Rückstellfeder 47 zwischen der Platte 22 und der Traverse 17 zum Zurückschieben der Traverse 17 nach einer Bremsung dient.

Nachfolgend sei die vorteilhafte Kopplung zwischen dem Drehhebel 7 und der Nachstellvorrichtung 11 näher betrachtet.

Nach der WO 91/19115 A wird der Drehhebel zur Ausbildung des Antriebsstiftes zum Antrieb der Antriebsgabel an der Nachstellvorrichtung im Schmiedeprozess an dem Drehhebel ausgebildet. Dies erfordert einen hohen Präzisionsaufwand, denn die Geometrie des Antriebsstiftes beeinflusst stark das Nachstellverhalten. Zusätzlich wird nach dem Stand der Technik an dem Drehhebel auch ein Blechteil angebracht, welches die Funktionen einer Käfigrückführung für ein Nadellager und die Positionierung des Zylinderstiftes übernimmt.

Nach einem weiteren erfinderischen Aspekt wird der Herstellprozess des Drehhebels dadurch deutlich vereinfacht und es wird die Präzision des Antriebselementes dadurch optimierbar, dass an dem Drehhebel ein Antriebsblech 39 ausgebildet wird, welches die Funktion des Antriebselementes zum Koppeln des Drehhebels 7 mit der Nachstellvorrichtung 11 übernimmt.

Beispielsweise können durch Stanzen und Biegen einer, zwei oder mehr der Antriebsfinger 36 an dem Antriebsblech 39 ausgebildet werden, welche in eine Antriebsgabel 37 der Nachstellvorrichtung 11 eingreifen.

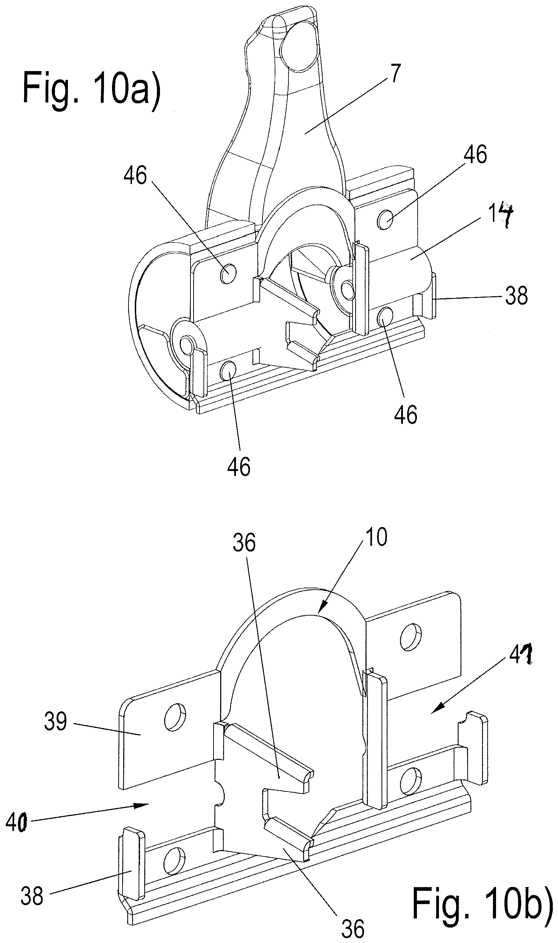

Bei dem Antriebsblech 39 kann es sich um ein zusätzliches Blech handeln, das lediglich diese Antriebsfunktion realisiert oder aber der eine oder die mehreren Antriebsfinger 36 bzw. allgemeiner die Funktion des Antriebs des Nachstellers 11 werden in ein bestehendes Blech wie das weiter oben erläuterte Blech zur Käfigrückführung integriert. Eine derartige Ausgestaltung zeigt Fig. 10.

Der oder die Antriebsfinger 36 können auch eine Art Zahnsegment ausbilden, eine Art Gabel, eine Art Kronenrad oder aber eine Art Kegelrad.

Nach Fig. 10 deckt ein einziges - hier allein durch Stanzen und umformendes Biegen hergestelltes - Antriebsblech 39 nahezu die gesamte zum Bremssattel gewandte, hier weitgehend ebene Seite des Drehhebels 7 bis auf die Ausnehmungen 10, 40, 41 für die Nachstellvorrichtung 10 und die Stützstifte 14a, b ab. Laschen 38 an dem Blech können für die axiale Fixierung der Stützstifte 14a, b genutzt werden.

Besonders vorteilhaft ist ferner, dass die Zuspannstempel und die Gewindetriebe, hier in bevorzugter Ausgestaltung die Gewindehülsen 19a, b hier jeweils an ihrem von den Druckstücken 21 abgewandten Enden je drehfest mit einem Drehmomentübertragungsanordnung mit einem Blechtopf 42 verbunden sind, der sie vorzugsweise zentriert und an der Traverse 17 hält.

Der jeweilige Blechtopf 42a, b um- bzw. übergreift mit seinem offenen Ende hier den jeweiligen Gewindestempel 20a, b - der sich relativ zum Blechtopf drehen kann - und auch das Ende der Gewindehülse 19a, b, mit welcher er sich gemeinsam dreht.

Der Boden jedes Blechtopfes 42a, b ist hier auf der von dem Bremsbelag 5 abgewandten Seite des Gewindetriebes mit der Gewindehülse 19a, b und dem Gewindestempel 20a, b angeordnet.

Die Gewindehülsen 19a, b durchgreifen Bohrungen der Traverse 17, die sie in Zuspannvorrichtung durchsetzen und in denen sie drehbar sind.

Zwischen den Druckstücken 21a, b und der Traverse 17 sind jeweils flanschartige Bereiche 19' an den Gewindehülsen 19a, b ausgebildet.

Der wenigstens eine aufgesetzte Blechtopf 42 übernimmt hier in vorteilhafter Weise nicht nur die Funktion einer Drehmomentübertragung auf weitere Elemente (s.u.) sondern auch die axiale Fixierung des äußeren Synchronzahnrades 34a, 34b auf der Traverse 17 und somit auch die Fixierung der Gewindehülse 19a, 19b in der Traverse/Brücke. 17, die an ihrem einen Ende durch den Flansch 19' und auf der anderen Seite wie vorstehend erläutert durch das Zahnrad 34a, b mit dem jeweiligen Blechtopf 42a, b axial aber drehbar fixiert ist..

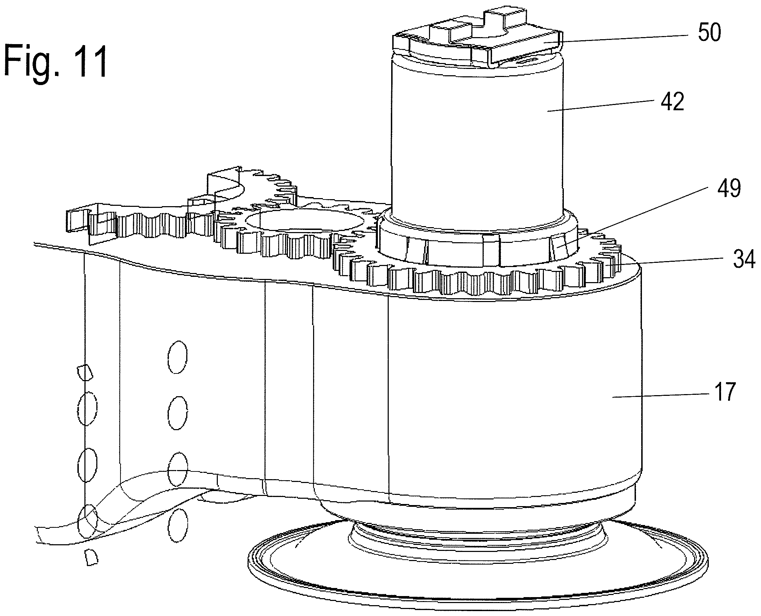

Dies wird nach Fig. 11 in einfacher Weise dadurch erreicht, dass am Blechtopf 42 Laschen 49 ausgebildet sind, insbesondere angeformt sind, welche in Zuspannrichtung auf das jeweilige Zahnrad 34a, b drücken. Die Zahnräder 34 sind drehfest mit den Gewindestempeln 20a, b verbunden, z.B. über Formschlusselemente zwischen dem Außenumfang der Hülsen 19 und dem Innenumfang der Zahnräder 34.

An den Bodenbereichen 42' der Blechtöpfe 42 sind in Richtung vorzugsweise abgedichtet verschließbarer Sattelöffnungen 45 vorzugsweise über weitere - in Fig. 1 im Querschnitt T-förmige - Drehmomentübertragungselemente 50 und ggf. in Fig. 1 nicht dargestellte Wellenstücke in verschiedener Weise vorteilhaft weitere Funktionen wie ein Rückdrehen an einem bei einem zu großen Drehmoment abscherbaren Rückstelladapter 44 oder eine Sensierung der Nachstelldrehungen oder dgl. realisierbar.

So ist es zur Verschleißsensierung notwendig, den Nachstellweg der Gewindestempel 20a, b zu erfassen. Dies kann über ein Potentiometer erfolgen, welches über die Drehung der Gewindehülsen und der Blechtöpfe 42 den momentanen Verschleißzustand sensiert. In Fig. 1 ist das Potentiometer schematisch eingezeichnet und mit dem Bezugszeichen 46 versehen.

Die Drehübertragung von den Topfelementen 42 erfolgt hier vorteilhaft über die Drehmomentübertragungselemente und einer hier aus weiteren Teilen bestehenden, insgesamt aber wellenartig wirkenden, Verbindung 50 (siehe Fig. 11), welche das Drehmomentübertragungselement beispielsweise mit einem Sensor oder dgl., hier mit einem Drehmomentübertragungsstück am Potentiometer 46 oder dem Adapter 44 verbindet (hier nicht im Detail dargestellt).

Dabei wird zum Antrieb des Verschleißpotentiometers 46 und zur Rückstellung der Gewindestempel an den Gewindeadaptern 44 eine Lösung geschaffen, welche ausreichend flexibel ist, um ein Kippen und Schwenken der Traverse 17 ohne Klemmen kompensieren zu können. Diese Lösung nutzt eine Schlittenanordnung, vorzugsweise eine Kreuzschlittenanordnung, jeweils am bremsbelagabgewandten Ende der Gewindetriebe, hier am Ende von deren Blechtöpfen.

Kommt es zu einem Kippen der Traverse 17, sorgt ein sog. Kreuzschlittenelement 50 (Fig. 1, 11, 12) im Zusammenspiel mit weiteren Elementen der Kreuzschlittenanordnung dafür, dass diese Querbewegung ausgeglichen werden kann.

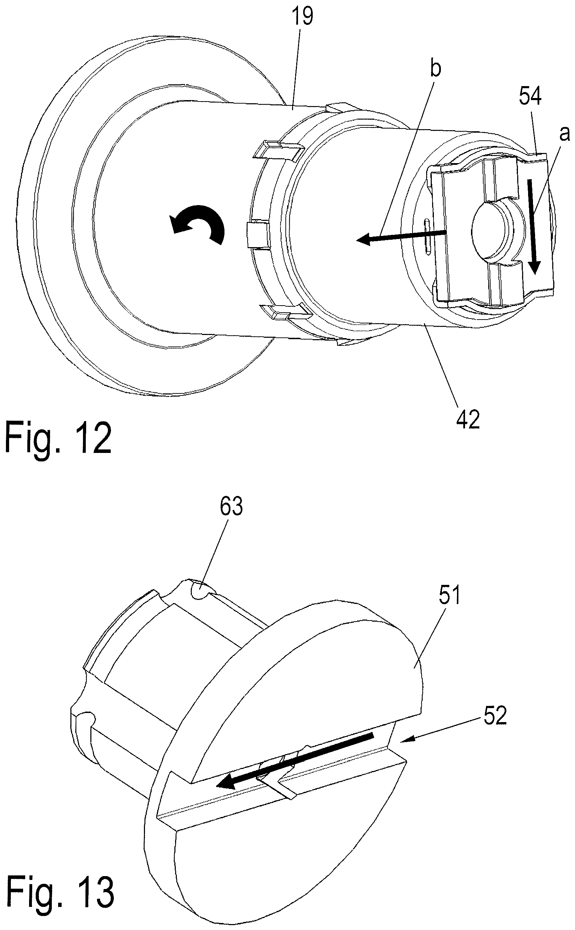

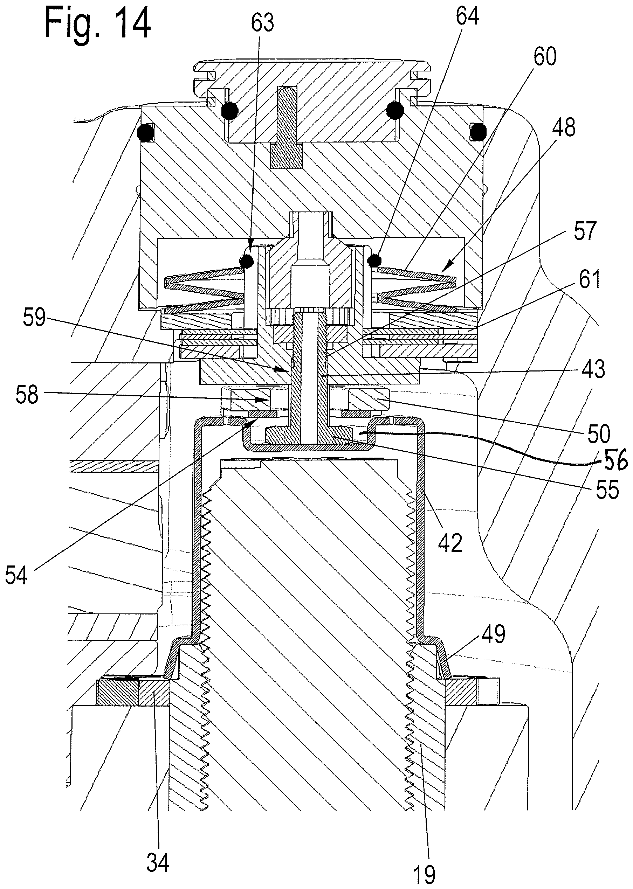

So kann in einer ersten Richtung a (Fig. 12) vorzugsweise radial zur Drehachse D eine Buchse 51 (als Teil der "Welle"; siehe Fig. 13, 14) mit einer Nut 52 auf einem sich hier radial zur Drehachse des Gewindetriebs erstreckenden Absatz 53 des Kreuzschlittenelements 50 gleiten (hier radial zur Drehachse des Gewindetriebes) und einen Versatz in dieser Richtung ggf. ausgleichen.
Ein Ausgleich in einer zweiten Richtung b (vorzugsweise senkrecht zur ersten Richtung und vorzugsweise wieder radial zur Drehachse D) erfolgt durch Bewegung des Kreuzschlittenelements 50 in einer dafür vorgesehenen, spielbehafteteten Aufnahme 54 am Blechtopf 42. Dabei ist die Aufnahme 54 vorzugsweise auch so bemessen, dass vom Kreuzschlittenelement 50 gewisse Schwenkbewegungen kompensiert werden.

Fig. 14 veranschaulicht ferner, wie die Kupplungsschaltstifte 43 mit einem Kopf 55 in eine Vertiefung 56 des Blechtopfes 42 eingreifen, wobei ein Schaft 57 eine zentrische Bohrung 58 des Kreuzschlittenelements 50 einerseits mit Spiel und eine Bohrung 59 der Buchse 51 durchgreifen. Hier ist die Buchse 51 mittels einer Tellerfeder 60 und einer Schaltkupplung 61 (hier eine Lamellenkupplung) gegen Richtung des Potentiometers vorgespannt.

Die hier nicht näher zu erläuternde Schaltkupplung 61 verhindert Drehungen der Gewindehülsen 19, wenn die Scheibenbremse nicht zugespannt ist. Im zugespannten Zustand werden die Gewindehülsen 19 in Richtung der Bremsscheibe bewegt, so dass sich die Schaltkupplung öffnet und die Drehung der Elemente: Gewindehülsen/Blechtöpfe 19/42, Kreuzschlitten 50, Buchsen 51 freigibt. Gehalten wird die Tellerfeder 60 mit einem Sprengring 64 in einer Nut 63 am Außenumfang der Buchse 51.

Die Kupplungs-/Tellerfederanordnung dient damit zur Lüftspielsicherung. Ein solches Lüftspielsicherungsmodul kann an den Enden beider Gewindetriebe vorgesehen sein. Die Buchse 51 kann sich somit drehen, wenn die Kupplung geöffnet ist. Dann kann ihre Drehung über Zapfen oder dergleichen mit entsprechenden Drehmomentübertragungskonturen nach Art einer Welle auf das Potentiometer 46 oder den Adapter 44 übertragen werden.

Die Kreuzschlittenelemente 50 in der Aufnahme 54 und mit der Buchse 51 erlauben als Kreuzschlittenanordnung im Zusammenspiel mit dem Drehmomentübertragungselement in einfacher und baulich kompakter Weise den Ausgleich der erläuterten Bewegungen der Traverse 17 und dennoch die Übertragung eines Drehmoments von dem wenigstens einen Gewindetrieb auf weitere Einrichtungen.

**Bezugszeichen**

| | |
|---|---|
| Zuspannvorrichtung | 1 |
| Öffnung | 2 |
| Bremssattel | 3 |
| Bremsscheibe | 4 |
| Bremsbeläge | 5, 6 |
| Drehhebel | 7 |
| Ende | 8 |
| Ausnehmung | 9 |
| Ausnehmung | 10 |
| Nachstellvorrichtung | 11 |
| Exzenteransätze | 12a, b |
| Schwenklager | 13a, b |
| Stützstifte | 14a, b |
| Schwenklager | 15a, b |
| Lagerböcke | 16a, b |
| Traverse | 17 |
| Zuspannstempel | 18a, b |
| Gewindehülsen | 19a, b |
| Gewindestempel | 20a, b |
| Druckstücke | 21a, b |
| Verschlußplatte | 22 |
| Öffnungen | 23a, b |
| Dichtungsanordnungen | 24a, b |
| Ausnehmung | 25 |
| Kontaktbereiche | 26a, b, c |
| Zentrieransatz | 27 |
| Ausnehmung | 28 |
| Zentrierstift | 29 |
| Sacklöcher | 30a, b |
| Getriebeanordnung | 31 |
| Zahnräder | 32, 33a, b, 34 a, b |
| Aussparung | 35a, b |
| Antriebsfinger | 36 |
| Antriebsgabel | 37 |
| Laschen | 38 |
| Antriebsblech | 39 |
| Ausnehmungen | 40, 41 |
| Blechtopf | 42 |
| Kupplungsschaltstifte | 43 |
| Rückstelladapter | 44 |
| Sattelöffnungen | 45 |
| Potentiometer | 46 |
| Rückstellfeder | 47 |
| Wellenstück | 48 |
| Laschen | 49 |
| Kreuzschlittenelement | 50 |
| Buchse | 51 |
| Nut | 52 |
| Absatz | 53 |
| Aufnahme | 54 |
| Kopf | 55 |
| Vertiefung | 56 |
| Schaft | 57 |
| Bohrung | 58 |
| Bohrung | 59 |
| Tellerfeder | 60 |
| Schaltkupplung | 61 |
| Zapfen | 62 |
| Nut | 63 |
| Sprengring | 64 |
| Bremsträger | 65 |

## Patentansprüche

1. Zuspannvorrichtung einer Scheibenbremse mit einem Bremssattel, die wenigstens einen Gewindetrieb aus einer Gewindehülse (19a, b) und einem Gewindestempel (20a, b) aufweist, wobei an einem von einem Bremsbelag abgewandten Ende des wenigstens einen Gewindetriebes eine Schlittenanordnung angeordnet oder ausgebildet ist, welche wenigstens ein winklig, insbesondere radial, zur Drehachse (D) des Gewindetriebes bewegliches Schlittenelement (50) aufweist, **dadurch gekennzeichnet, dass** die wenigstens eine Gewindehülse (19a, b) an ihrem von einem jeweiligen Druckstück abgewandten Ende je drehfest mit einem Blechtopf (42) verbunden ist.

2. Zuspannvorrichtung nach Anspruch 1, **dadurch gekennzeichnet, dass** die Schlittenanordnung als eine Kreuzschlittenanordnung ausgebildet ist.

3. Zuspannvorrichtung nach Anspruch 1 oder 2, **dadurch gekennzeichnet, dass**
a) einen Drehhebel (7) mit einem oder mehreren Exzenterabschnitten (12a, b);
b) eine Traverse (17), auf welche der Drehhebel (7) vorzugsweise über wenigstens ein Zwischenelement einwirkt; und
c) wenigstens einen oder zwei der an der Traverse (17) angeordneten oder ausgebildeten Gewindetriebe/Zuspannstempel (18a, b);
d) eine Nachstellvorrichtung (11) zum Ausgleich von Belag- und Scheibenverschleiß;
e) eine Getriebeanordnung (31) zum Übertragen der Drehbewegungen der Nachstellvorrichtung (11) auf Getriebeelemente der Zuspannstempel (18) und/oder zur Synchronisation der Drehbewegungen von Elementen der Zuspannstempel (18).

4. Zuspannvorrichtung nach Anspruch 3, **dadurch gekennzeichnet, dass** die Getriebeanordnung (31) zwischen dem Drehhebel (7) und der Traverse (17) angeordnet ist.

5. Zuspannvorrichtung nach einem der vorstehenden Ansprüche, **dadurch gekennzeichnet, dass** der mit der wenigstens einen Gewindehülse (19a, b) an ihrem von einem jeweiligen Druckstück abgewandten Ende je drehfest verbundene Blechtopf (42) die wenigstens eine Gewindehülse (19a, b) zentriert und an der Traverse (17) hält.

6. Zuspannvorrichtung nach einem der vorstehenden Ansprüche, **dadurch gekennzeichnet, dass** der jeweilige Blechtopf (42a, b) mit seinem offenen Ende den jeweiligen Gewindestempel (20a, b) übergreift und auch das Ende der Gewindehülse (19a, b), mit welcher er sich gemeinsam drehen kann.

7. Zuspannvorrichtung nach einem der vorstehenden Ansprüche, **dadurch gekennzeichnet, dass** der Boden des Blechtopfes (42a, b) auf der von dem Bremsbelag (5) abgewandten Seite des Gewindetriebes mit der Gewindehülse (19a, b) und dem Gewindestempel (20a, b) angeordnet ist.

8. Zuspannvorrichtung nach einem der vorstehenden Ansprüche, **dadurch gekennzeichnet, dass** der Blechtopf (42) das axiale Fixierungselement für ein Synchronzahnrad (34a, 34b) des Getriebes ist.

9. Zuspannvorrichtung nach einem der Ansprüche 2 bis 8, **dadurch gekennzeichnet, dass** auf die Kreuzschlittenanordnung ein Kreuzschlittenelement aufweist, an dem (50) eine Buchse (51) der Kreuzschlittenanordnung in einer ersten Richtung (a) gleitend angeordnet ist.

10. Zuspannvorrichtung nach Anspruch 9, **dadurch gekennzeichnet, dass** ein Kreuzschlittenelement (50) der Kreuzschlittenanordnung in einer spielbehafteteten Aufnahme (54) am Blechtopf (42) angeordnet ist, in welcher es in einer zweiten, zur ersten Richtung nicht parallelen winklig verschiedenen Richtung (b), verschieblich ist.

11. Zuspannvorrichtung nach Anspruch 10, **dadurch gekennzeichnet, dass** die Richtungen (a) und (b) winklig zueinander ausgerichtet sind.

12. Zuspannvorrichtung nach einem der Ansprüche 10 oder 11, **dadurch gekennzeichnet, dass** die Aufnahme (54) ferner derart bemessen ist, dass von Kreuzschlittenanordnung mit dem Kreuzschlittenelement (50) Schwenkbewegungen der Traverse (17) kompensierbar sind.

13. Zuspannvorrichtung nach einem der Ansprüche 9 bis 12, **dadurch gekennzeichnet, dass** Kupplungsschaltstifte (43) mit einem Kopf (55) in eine Vertiefung (56) des Blechtopfes (42) eingreifen, wobei ein Schaft (57) eine zentrische Bohrung (58) des Kreuzschlittenelements (50) und eine Bohrung (59) der Buchse (51) durchgreift.

14. Zuspannvorrichtung nach einem der Ansprüche 9 bis 13, **dadurch gekennzeichnet, dass** die Buchse (51) mittels Tellerfedern (60) und einer Schaltkupplung (61) vorgespannt ist, welche vorzugsweise Drehungen der Gewindehülsen (19) verhindert, wenn die Scheibenbremse nicht zugespannt ist.

## Claims

1. A brake application device of a disk brake with a brake caliper, comprising at least one screw drive made up of a threaded sleeve (19a, b) and a threaded plunger (20a, b), wherein at an end of the at least one screw drive facing away from a brake pad, a slide arrangement is arranged or formed which comprises at least one slide element (50) that is moveable at an angle, in particular radially to the screw drive's axis of rotation (D), **characterized in that** the at least one threaded sleeve (19a, b), at its end facing away from a respective pressure piece, is in each case connected to a pot (42) of sheet metal in a rotationally fixed manner.

2. The brake application device according to claim 1, **characterized in that** the slide arrangement is formed as cross slide arrangement.

3. The brake application device according to claim 1 or 2, **characterized by**
a) a rotary lever (7) having one or more eccentric sections (12a, b);
b) a cross member (17) which is acted upon by the rotary lever (7) preferably via at least one intermediate element; and
c) at least one or two screw drives/application plungers (18a, b) arranged or formed on the cross member (17);
d) a readjusting device (11) for compensating for pad and disk wear;
e) a gear assembly (31) for transmitting rotary movements of the readjusting device (11) to gear elements of the application plungers (18) and/or for synchronizing the rotary movements of elements of the application plungers (18).

4. The brake application device according to claim 3, **characterized in that** the gear assembly (31) is arranged between the rotary lever (7) and the cross member (17).

5. The brake application device according to any one of the preceding claims, **characterized in that** the pot (42) of sheet metal that is in each case connected to the at least one threaded sleeve (19a, b) in a rotationally fixed manner at its end facing away from a respective pressure piece centers the at least one threaded sleeve (19a, b) and holds it against the cross member (17).

6. The brake application device according to any one of the preceding claims, **characterized in that** the respective pot (42a, b) of sheet metal overlaps the respective threaded plunger (20a, b) with its open end, and also the end of the threaded sleeve (19a, b) with which it is able to co-rotate.

7. The brake application device according to any one of the preceding claims, **characterized in that** the bottom of the pot (42a, b) of sheet metal is arranged on the side of the screw drive facing away from the brake pad (5) together with the threaded sleeve (19a, b) and the threaded plunger (20a, b).

8. The brake application device according to any one of the preceding claims, **characterized in that** the pot (42) of sheet metal is the axial fixing element for a synchronous toothed wheel (34a, 34b) of the gear.

9. The brake application device according to any one of claims 2 to 8, **characterized in that** the cross slide arrangement comprises a cross slide element on which (50) a bushing (51) of the cross slide arrangement is arranged to be sliding in a first direction (a).

10. The brake application device according to claim 9, **characterized in that** a cross slide element (50) of the cross slide arrangement is arranged on the pot (42) of sheet metal in a receptacle (54) with backlash, in which it is displaceable in a second, non-parallel angularly different direction (b) relative to the first direction.

11. The brake application device according to claim 10, **characterized in that** the directions (a) and (b) are mutually oriented at an angle.

12. The brake application device according to any one of claims 10 or 11, **characterized in that** the receptacle (54) is furthermore dimensioned such that pivot movements of the cross member (17) may be compensated by the cross slide arrangement with the cross slide element (50).

13. The brake application device according to any one of claims 9 to 12, **characterized in that** coupling actuating pins (43) having a head (55) engage into a depression (56) of the pot (42) of sheet metal, wherein a shaft (57) penetrates a centric bore (58) of the cross slide element (50) and a bore (59) of the bushing (51).

14. The brake application device according to any one of claims 9 to 13, **characterized in that** the bushing (51) is pre-tensioned by means of plate springs (60) and a clutch coupling which preferably prevents rotations of the threaded sleeves (19) when the disc brake is not applied.

## Revendications

1. Dispositif d'application d'effort d'un frein à disque comprenant un étrier de frein, qui présente au moins un mécanisme fileté constitué d'une douille filetée (19a, b) et d'un poinçon fileté (20a, b), sachant qu'un agencement de coulisseau qui présente au moins un élément de coulisseau (50) mobile de façon angulaire, en particulier radiale, par rapport à l'axe de rotation (D) du mécanisme fileté est disposé ou constitué à une extrémité opposée à la garniture de frein de l'au moins un mécanisme fileté, **caractérisé en ce que** l'au moins une douille filetée (19a, b) est reliée chaque fois de manière fixe en rotation à un pot en tôle (42) à son extrémité opposée à une pièce de pression respective.

2. Dispositif d'application d'effort selon la revendication 1, **caractérisé en ce que** l'agencement de coulisseau est constitué comme agencement de coulisseau croisé.

3. Dispositif d'application d'effort selon la revendication 1 ou 2, **caractérisé par**
a) un levier de rotation (7) comprenant une ou plusieurs sections à excentrique (12a, b) ;
b) une traverse (17) sur laquelle le levier de rotation (7) agit de préférence via au moins un élément intermédiaire ; et
c) au moins un ou deux mécanismes filetés / poinçons d'application d'effort (18a, b) disposés ou constitués au niveau de la traverse (17) ;
d) un dispositif de rattrapage (11) pour compenser une usure de garniture et de disque ;
e) un agencement d'engrenage (31) pour la transmission des mouvements de rotation du dispositif de rattrapage (11) à des éléments d'engrenage des poinçons d'application d'effort (18) et/ou pour la synchronisation des mouvements de rotation d'éléments des poinçons d'application d'effort (18).

4. Dispositif d'application d'effort selon la revendication 3, **caractérisé en ce que** l'agencement d'engrenage (31) est disposé entre le levier de rotation (7) et la traverse (17).

5. Dispositif d'application d'effort selon l'une des revendications précédentes, **caractérisé en ce que** le pot en tôle (42) relié chaque fois de manière fixe en rotation à l'au moins une douille filetée (19a, b) à son extrémité opposée à une pièce de pression respective maintient l'au moins une douille filetée (19a, b) centrée et contre la traverse (17).

6. Dispositif d'application d'effort selon l'une des revendications précédentes, **caractérisé en ce que** le pot en tôle (42a, b) respectif enjambe le poinçon fileté (20a, b) respectif avec son extrémité ouverte, ainsi que l'extrémité de la douille filetée (19a, b), avec laquelle il peut tourner conjointement.

7. Dispositif d'application d'effort selon l'une des revendications précédentes, **caractérisé en ce que** le fond du pot en tôle (42a, b) est disposé du côté opposé à la garniture de frein (5) du mécanisme fileté avec la douille filetée (19a, b) et le poinçon fileté (20a, b).

8. Dispositif d'application d'effort selon l'une des revendications précédentes, **caractérisé en ce que** le pot en tôle (42) est l'élément d'arrêt axial pour une roue dentée synchrone (34a, 34b) de l'engrenage.

9. Dispositif d'application d'effort selon l'une des revendications 2 à 8, **caractérisé en ce que** l'agencement de coulisseau croisé présente un élément de coulisseau croisé, sur lequel (50) un manchon (51) de l'agencement de coulisseau croisé est disposé de manière coulissante dans une première direction (a).

10. Dispositif d'application d'effort selon la revendication 9, **caractérisé en ce qu'**un élément de coulisseau croisé (50) de l'agencement de coulisseau croisé est disposé dans un logement (54) doté d'un jeu au niveau du pot en tôle (42), dans lequel il est translatable dans une deuxième direction (b) non parallèle à la première direction et angulairement différente.

11. Dispositif d'application d'effort selon la revendication 10, **caractérisé en ce que** les directions (a) et (b) sont orientées angulairement l'une par rapport à l'autre.

12. Dispositif d'application d'effort selon l'une des revendications 10 ou 11, **caractérisé en ce que** le logement (54) est en outre dimensionné de telle façon que des mouvements de pivotement de la traverse (17) puissent être compensés par l'agencement de coulisseau croisé avec l'élément de coulisseau croisé (50).

13. Dispositif d'application d'effort selon l'une des revendications 9 à 12, **caractérisé en ce que** des goujons de commutation d'accouplement (43) s'engagent avec une tête (55) dans une cavité (56) du pot en tôle (42), sachant qu'un fût (57) pénètre dans un alésage central (58) de l'élément de coulisseau croisé (50) et un alésage (59) du manchon (51).

14. Dispositif d'application d'effort selon l'une des revendications 9 à 13, **caractérisé en ce que** le manchon (51) est précontraint au moyen de rondelles-ressorts (60) et d'un embrayage (61), lequel empêche de préférence des rotations des douilles filetées (19) lorsque le frein à disque n'est pas serré.
